# EUROPÄISCHE PATENTSCHRIFT

(11) **EP 1 857 660 B1**
(45) Veröffentlichungstag und Bekanntmachung des Hinweises auf die Patenterteilung: **02.10.2013**
(21) Anmeldenummer: 07107777.0
(22) Anmeldetag: 09.05.2007
(51) Int. Cl.: F02D 37/00, F02D 41/00, F02D 41/40

(54) **Verfahren zum Steuern einer Brennkraftmaschine**
Method of controlling an internal combustion engine
Méthode de contrôle d'un moteur à combustion

(30) Priorität: 19.05.2006 DE 102006023853
(43) Veröffentlichungstag der Anmeldung: 21.11.2007
(73) Patentinhaber: Mahle International GmbH, 70376 Stuttgart (DE)
(72) Erfinder: Elsässer, Dr. Alfred, 75210, Keltern (DE)
(74) Vertreter: BRP Renaud & Partner

(56) Entgegenhaltungen:
- DE-A1- 10 032 669
- DE-A1- 10 220 076
- DE-A1- 10 344 759
- DE-A1- 19 754 287
- DE-A1-102004 048 705
- US-A1- 2003 024 502

## Beschreibung

Die vorliegende Erfindung betrifft ein Verfahren zum Steuern einer entdrosselten Brennkraftmaschine. Die Erfindung betrifft außerdem eine Vorrichtung zum Steuern einer entdrosselten Brennkraftmaschine. Des weiteren betrifft die Erfindung eine entdrosselte Brennkraftmaschine, die mit einer derartigen Steuervorrichtung ausgestattet ist.

Aus der DE 103 44 759 A1 ist ein Verfahren zum Steuern einer Brennkraftmaschine bekannt. Die mit dem bekannten Verfahren gesteuerte Brennkraftmaschine umfasst eine gemeinsame Frischgasleitung, die mehreren Frischgasrohren Frischgas zuführt, die ihrerseits je einem Zylinder Frischgas zuführen. Die Brennkraftmaschine umfasst außerdem wenigstens ein Einlassventil je Zylinder und außerdem ein Impulsladeventil je Frischgasrohr zum Öffnen und Sperren des jeweiligen Frischgasrohrs. Außerdem ist je Zylinder eine Einspritzdüse zum Zumessen von Kraftstoff vorgesehen. Die Brennkraftmaschine ist gedrosselt und enthält dementsprechend in der Frischgasleitung eine Drosseleinrichtung, insbesondere eine Drosselklappe, zum lastabhängigen Drosseln des den einzelnen Zylindern zugeführten Frischgases. Beim bekannten Steuerverfahren wird für jeden Zylinder die zeitliche Lage der Einspritzdauer des Kraftstoffs abhängig von einem Zeitpunkt einer Änderung der Schaltstellung des jeweiligen Impulsladeventils eingestellt. Durch die Abstimmung der Kraftstoffeinspritzung auf die Impulsaufladung kann der Gemischbildungsprozess und damit der Verbrennungsprozess im Hinblick auf reduzierte Schadstoffemissionen verbessert werden. Bei der Impulsaufladung mittels Impulsladeventilen werden strömungsdynamische Effekte zur Verbesserung der Frischgasbeladung der einzelnen Zylinder ausgenutzt.

Aus Pischinger "Variable Ventilsteuerung II", Expertverlag, Seiten 244 bis 260, ist eine entdrosselte Brennkraftmaschine bekannt, die sich durch das Fehlen einer lastabhängig arbeitenden Drosseleinrichtung in der gemeinsamen Frischgasleitung auszeichnet. Um bei der bekannten entdrosselten Brennkraftmaschine dennoch eine vom jeweiligen Lastzustand der Brennkraftmaschine abhängige Frischgasbeladung der einzelnen Zylinder realisieren zu können, werden bei der bekannten Brennkraftmaschine die Öffnungs- und Schließzeiten der Einlassventile entsprechend adaptiert. Hierzu arbeitet die bekannte Brennkraftmaschine mit einer elektromagnetischen Ventilsteuerung für die Einlassventile, die es erlaubt, die Einlassventile willkürlich zu öffnen und zu schließen. Derartige elektromagnetische Ventilsteuerungen sind jedoch erheblich teuerer als herkömmliche, durch Nockenwellen gesteuerte Ventiltriebe. Auch eine drosselfreie oder entdrosselte Frischgasversorgung der Brennkraftmaschine führt zu einer reduzierten Ladungswechselarbeit sowie zu einer Verbesserung der Qualität des Verbrennungsvorgangs, was in reduzierten Emissionen und Kraftstoffverbrauchswerten resultiert.

Aus der DE 102 20076 ist ein Verfahren zur Steuerung einer Brennkraftmaschine mit Impulsaufladung bekannt.

Die vorliegende Erfindung beschäftigt sich mit dem Problem, für eine Brennkraftmaschine einen Weg aufzuzeigen, der einen reduzierten Kraftstoffverbrauch ermöglicht und dabei vergleichsweise preiswert realisierbar ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Frischgasmengensteuerung bei einer entdrosselten Brennkraftmaschine mit Hilfe von in den einzelnen Frischgasrohren angeordneten Taktventilen zu realisieren, wobei gleichzeitig die Kraftstoffeinspritzung auf die Schaltzeiten der Taktventile abgestimmt wird. Durch eine geeignete Auswahl von Schließzeitpunkten und Öffnungszeitpunkten der einzelnen Taktventile lässt sich die für den jeweiligen Lastzustand der Brennkraftmaschine erforderliche Frischgasmenge oder Frischgasbeladung an jedem Zylinder gezielt einstellen. Eine Drosseleinrichtung zum lastabhängigen Drosseln der Frischgaszufuhr ist somit entbehrlich. Insofern nutzt die Erfindung die Vorteile einer entdrosselten Brennkraftmaschine. In Verbindung mit den vergleichsweise preiswert bauenden Taktventilen ergibt sich eine kostengünstige Lösung. Darüber hinaus führt das Abstimmen der Einspritzvorgänge auf die Taktpunkte der Taktventile ebenfalls zu einer zusätzlichen Verbesserung des Verbrennungsvorgangs. Insgesamt lässt sich somit auf vergleichsweise preiswerte Weise eine deutliche Verbesserung des Verbrennungsprozesses hinsichtlich Emissionen und Kraftstoffverbrauch erzielen.

Die Taktventile werden zumindest während eines Teillastbetriebs der Brennkraftmaschine so angesteuert, dass beim jeweiligen Zylinder während eines Ansaugtakts zumindest zwei zeitlich voneinander beabstandete Frischgasbeladungsphasen erfolgen. Während der ersten Beladungsphase erfolgt quasi eine Grundbeladung des jeweiligen Zylinders, die beispielsweise vorteilhaft zur Gemischbildung genutzt werden kann. Mit der zweiten Beladungsphase lässt sich vergleichsweise zeitnah zum Zündzeitpunkt ein gewünschter Strömungszustand, z.B. Drallströmung und/oder Tumbleströmung, im Brennraum erzeugen, was im Hinblick auf Schadstoffemission und Wirkungsgrad des Verbrennungsprozesses ebenfalls von Vorteil ist.

Während zwei separaten Frischgasbeladungsphasen wird je eine separate Kraftstoffeinspritzung durchgeführt. Beispielsweise ermöglicht die zweite Kraftstoffeinspritzung eine Anfettung des mit Hilfe der ersten Einspritzung erzeugten Gemischs, um so die Zündfähigkeit der Gesamtbeladung signifikant zu steigern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine,
- Fig. 2: ein Diagramm, in dem die Schaltzustände eines Einlassventils, eines Taktventils und einer Einspritzdüse in Abhängigkeit eines Kolbenhubs wiedergegeben sind.

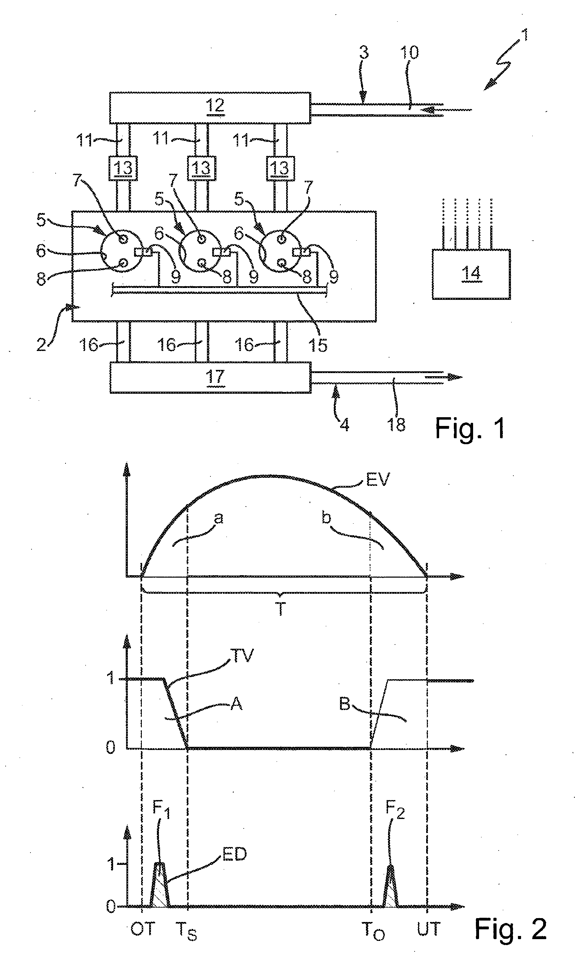

Entsprechend Fig. 1 umfasst eine Brennkraftmaschine 1 einen Motorblock 2, eine Frischgasanlage 3, die dem Motorblock 2 Frischgas zuführt und eine Abgasanlage 4, die Abgas vom Motorblock 2 abführt. Die Brennkraftmaschine 1 ist vorzugsweise in einem Kraftfahrzeug angeordnet.

Der Motorblock 2 enthält mehrere Zylinder 5, im Beispiel sind ohne Beschränkung der Allgemeinheit drei Zylinder 5 dargestellt. Jeder Zylinder 5 umschließt einen Brennraum 6 und führt in bekannter Weise jeweils einen nicht gezeigten Kolben. Jedem Zylinder 5 ist zumindest ein Einlassventil 7 und wenigstens ein Auslassventil 8 zugeordnet. Die Einlassventile 7 sind so ausgestaltet und angeordnet, dass sie in üblicher Weise einen nicht näher bezeichneten Frischgaseinlass des jeweiligen Brennraums 6 öffnen und schließen können. In entsprechender Weise sind die Auslassventile 8 so ausgestaltet und angeordnet, dass sie in üblicher Weise einen nicht gezeigten Abgasauslass des jeweiligen Brennraums 6 öffnen und schließen können. Eine zugehörige Ventilsteuerung ist nicht dargestellt. Die Gaswechselventile 7, 8 können auf herkömmliche Weise mittels Nockenwellen gesteuert sein, was vergleichsweise preiswert realisierbar ist. Ebenso ist es möglich, eine elektromagnetische Ventilsteuerung vorzusehen.

Des weiteren ist jedem Zylinder 5 eine Einspritzdüse 9 zugeordnet, die bei entsprechender Ansteuerung Kraftstoff in den jeweiligen Brennraum 6 eindüsen kann. Die Einspritzdüsen 9 sind beispielsweise an eine gemeinsame Kraftstoffversorgungsleitung 15 angeschlossen, die unter Hochdruck stehenden Kraftstoff bereitstellt.

Die Frischgasanlage 3 umfasst zumindest eine gemeinsame Frischgasleitung 10, die mit mehreren einzelnen Frischgasrohren 11 kommunizierend verbunden ist, wobei jedes Frischgasrohr 11 zu einem der Brennräume 6, also zu einem der Zylinder 5 führt. Im vorliegenden Fall sind die Frischgasleitung 10 und die Frischgasrohre 11 über einen Frischgasverteiler 12 miteinander verbunden. Bei einer anderen Ausführungsform können die Frischgasrohre 11 auch direkt an die Frischgasleitung 10 angeschlossen sein.

Jedes Frischgasrohr 11 enthält jeweils ein Taktventil 13, das so ausgestaltet ist, dass es das zugehörige Frischgasrohr 11 öffnen und schließen kann. Zur Betätigung der Taktventile 13 und der Einspritzdüsen 9 ist eine Steuerung 14 vorgesehen. Diese Steuerung 14 hat dabei Zugriff auf Signale oder allgemein auf Informationen, die es ihr ermöglichen, den aktuellen Lastzustand der Brennkraftmaschine 1 zu ermitteln. Der Begriff "Lastzustand" umfasst insbesondere die aktuelle Belastung und Leistungsabgabe sowie die aktuelle Drehzahl der Brennkraftmaschine 1. Beispielsweise ist die Steuerung 14 mit einem hier nicht gezeigten Motorsteuergerät verbunden. Ebenso kann die Steuerung 14 in ein derartiges Motorsteuergerät hardwaremäßig integriert und/oder softwaremäßig implementiert sein.

Die Abgasanlage 4 umfasst in üblicher Weise einzelne Abgasrohre 16, die direkt oder wie hier über einen Abgassammler 17 an eine gemeinsame Abgasleitung 18 angeschlossen sind.

Die Brennkraftmaschine 1 bzw. deren Frischgasanlage 3 ist entdrosselt. Das bedeutet, dass die Brennkraftmaschine 1 bzw. deren Frischgasanlage 3 zumindest stromauf der Taktventile 13 keine Einrichtung zum lastabhängigen Drosseln der Frischgasversorgung der einzelnen Brennräume 6 enthält. Allerdings kann die Brennkraftmaschine 1, z.B. im Motorblock 2, grundsätzlich aus Sicherheitsgründen, z.B. für Notlaufeigenschaften, eine Drosseleinrichtung aufweisen, die jedoch im Normalbetrieb keine Drosselfunktion im herkömmlichen Sinne aufweist. Insbesondere enthält die Brennkraftmaschine 1 bzw. deren Frischgasanlage 3 in der Frischgasleitung 10 keine Drosselklappe. In der Folge herrscht im Leitungssystem der Frischgasanlage 3 im wesentlichen Umgebungsdruck, gegebenenfalls geringfügig gedrosselt durch ein nicht gezeigtes Luftfilter, bzw. herrscht im Leitungssystem der Frischgasanlage 3 ein durch die Ansaugung der einzelnen Zylinder 5 während eines Einlasshubs oder Ansaugtakts des zugehörigen Kolbens erzeugter Saugdruck, sofern dieser von den Taktventilen 13 in das übrige Leitungssystem der Frischgasanlage 3 durchgelassen wird. Der gegebenenfalls durch besagte leichte Drosselung herrschende geringe Unterdruck ist jedenfalls betragsmäßig deutlich geringer als ein Unterdruck, der bei einem konventionellen Drosselklappensystem, also bei einer gedrosselten Brennkraftmaschine, zumindest im Teillastbetrieb, vorherrscht.

Fig. 2 zeigt auf der Abszisse exemplarisch einen Ausschnitt eines Kolbenhubs, nämlich eines Einlasshubs während eines Ansaugtakts, der beim oberen Totpunkt OT des jeweiligen Kolbens beginnt und beim unteren Totpunkt UT des Kolbens endet. Auf der Ordinate sind zueinander versetzt die Verläufe des Einlassventils 7, des Taktventils 13 und der Einspritzdüse 9 beim jeweiligen Brennraum 6 bzw. beim jeweiligen Zylinder 5 in Abhängigkeit des Einlasshubs des jeweiligen Kolbens aufgetragen. Der Verlauf des Einlassventils 7 ist dabei mit EV bezeichnet. Der Verlauf des Taktventils 13 ist mit TV bezeichnet, und der Verlauf der Einspritzdüse ist ED bezeichnet.

Das geschlossene Taktventil 13 und die deaktivierte Einspritzdüse 9 werden im Diagramm jeweils durch eine Null-Linie repräsentiert, während das geöffnete Taktventil 13 und die aktivierte Einspritzdüse 9 jeweils durch eine Eins-Linie repräsentiert werden. Die Taktventile 13 weisen im Betrieb demnach nur zwei Schaltzustände "AUF" und "ZU" auf, was die Taktventile 13 von herkömmlichen Drosselklappen unterscheidet. Das Verhalten der Einspritzdüse 9 ist hier ebenfalls zur Vereinfachung durch die Zustände "Aktiv" und "Inaktiv" dargestellt. Es ist klar, dass für den eigentlichen Verlauf der Kraftstoffeindüsung durchaus komplexere Einspritzvorgänge realisierbar sind.

Die Steuerung 14 ist so ausgestaltet, dass sie die Taktventile 13 und die Einspritzdüse 9 zur Realisierung eines Betriebsverfahrens für die Brennkraftmaschine 1 ansteuern kann, das im folgenden näher erläutert wird.

Im Betrieb der Brennkraftmaschine 1 führt jeder Kolben zyklisch während seines Ansaugtakts einen Einlasshub durch, der am oberen Totpunkt OT beginnt und am unteren Totpunkt UT endet. Das zugehörige Einlassventil 7 ist an die Kolbenbewegung gekoppelt, beispielsweise über eine Nockenwellensteuerung. Während des Einlasshubs besitzt das jeweilige Einlassventil 7 ein Einlasszeitfenster T, das in Fig. 2 durch eine geschweifte Klammer angedeutet ist. Das Einlasszeitfenster T ist an seinem Beginn durch ein Öffnen des Einlassventils 7 und an seinem Ende durch ein Schließen des Einlassventils 7 begrenzt. Ohne Beschränkung der Allgemeinheit erfolgt im vorliegenden Fall das Öffnen des Einlassventils 7 im oberen Totpunkt OT des Kolbenhubs während das Schließen des Einlassventils 7 im unteren Totpunkt UT des Kolbens erfolgt. Im gezeigten Beispiel fällt somit das Einlasszeitfenster T mit dem Einlasshub des jeweiligen Kolbens zusammen.

Während des Einlasshub des Kolbens muss der jeweilige Brennraum 6 mit Frischgas beladen werden. Die Frischgasmenge bzw. die Frischgasbeladung, die in den Brennraum 6 einzubringen ist, hängt dabei vom aktuellen Lastzustand sowie von der Drehzahl der Brennkraftmaschine 1 ab.

Die Erfindung schlägt nun vor, die dem jeweiligen Brennraum 6 zuzuführende Frischgasmenge mit Hilfe des jeweiligen Taktventils 13 zu steuern. Dabei erfolgt die Zumessung des Frischgases nicht über eine Drosselung des jeweiligen Frischgasrohres 11, sondern über die gezielte Einstellung derjenigen Zeit, in der sowohl das Einlassventil 7 als auch das zugehörige Taktventil 13 geöffnet sind. Grundsätzlich kann somit das Taktventil 13 innerhalb des Einlasszeitfensters T öffnen, für eine vorbestimmte Beladungszeit geöffnet bleiben und dann wieder schließen. Des Weiteren ist es grundsätzlich möglich, innerhalb des Einlasszeitfensters T zwei oder mehr zeitlich voneinander getrennte Öffnungsphasen des Taktventils 13 zu realisieren, zumindest während eines Teillastbetriebs der Brennkraftmaschine 1. Bevorzugt wird jedoch die in Fig. 2 dargestellte Ausführungsform, bei welcher das jeweilige Taktventil 13 so getaktet wird, dass zwei zeitlich voneinander beabstandete Beladungsphasen entstehen. In Fig. 2 ist eine zeitlich vorangehende erste Beladungsphase mit A bezeichnet, während eine zeitlich nachfolgende zweite Beladungsphase mit B bezeichnet ist. Um diese beiden Beladungsphasen A, B zu realisieren, wird das jeweilige Taktventil 13 bei geöffnetem Einlassventil 7, also innerhalb des Einlasszeitfensters T bei einem Schließzeitpunkt Tₛ geschlossen und erst bei einem späteren Öffnungszeitpunkt Tₒ wieder geöffnet, wobei der Öffnungszeitpunkt Tₒ noch innerhalb des Einlasszeitfensters T liegt. Sowohl Schließzeitpunkt Tₛ als auch Öffnungszeitpunkt Tₒ hängen vom aktuellen Lastzustand, also auch von der Drehzahl der Brennkraftmaschine 1 ab. Die erste Beladungsphase A beginnt hier mit dem Öffnen des Einlassventils 7, also hier am oberen Totpunkt UT und endet mit dem Schließen des Taktventils 13, also zum Schließzeitpunkt Tₛ. In entsprechender Weise beginnt die zweite Beladungsphase B mit dem Öffnen des Taktventils 13, also zum Öffnungszeitpunkt Tₒ und endet hier mit dem Schließen des Einlassventils 7, also am unteren Totpunkt UT.

Die eigentliche Frischgasbeladung erfolgt bei der hier gezeigten, bevorzugten Ausführungsform während einer Überschneidung zwischen den Öffnungsphasen des Taktventils 13 einerseits und der Öffnungsphase des Einlassventils 7 andererseits. Diese Überschneidungen sind in Fig. 2 als schraffierte Flächen dargestellt und mit a für die erste Frischgasbeladungsphase und mit b für die zweite Frischgasbeladungsphase bezeichnet. Bemerkenswert ist, dass mit Hilfe dieser Überschneidungen a, b extrem geringe Frischgasmengen gesteuert werden können. Insbesondere lassen sich diese Überschneidungen a, b, zeitlich kürzer und sogar deutlich kürzer einstellen als die minimal einstellbaren Öffnungszeitdauern für das Taktventil 13 beziehungsweise für das Einlassventil 7. Somit kann die Beladung des jeweiligen Zylinders 5 im Teillastbetrieb mit sehr kleinen bis kleinsten Frischgasmengen realisiert werden. Für die erzielbaren Emissions- und Kraftstoffverbrauchswerte ergeben sich dadurch signifikante Verbesserungen.

Bemerkenswert ist, dass hier durch gewählte Ansteuerung der Taktventile 13 die Zumessung ungedrosselter Frischgasmengen zu den einzelnen Zylindern 5 bzw. Brennräumen 6 realisiert wird. Hierbei wird regelmäßig zumindest im Teillastbetrieb keine Impulsaufladung realisiert. Allerdings kann im Volllastbetrieb die Ansteuerung der Taktventile 13 zur Realisierung einer Impulsaufladung erfolgen.

Entsprechend Fig. 2 steuert die Steuerung 14 die jeweilige Einspritzdüse 9 in Abhängigkeit der Ansteuerung des jeweiligen Taktventils 13 an. Insbesondere stellt die Steuerung 14 die zeitliche Lage der Einspritzdauer der jeweiligen Einspritzdüse 9 abhängig vom Zeitpunkt einer Änderung der Schaltstellung des jeweiligen Taktventils 13 ein. Beispielsweise erfolgt die Abstimmung zwischen der Taktung des Taktventils 13 und dem jeweiligen Einspritzvorgang so, dass nur während einer Beladungsphase A, B Kraftstoff eingespritzt wird. Die jeweilige Einspritzmenge ist hier ebenfalls durch eine schraffierte Fläche angedeutet und mit F₁ für eine erste Einspritzmenge und F₂ für eine zweite Einspritzmenge bezeichnet.

Im gezeigten Beispiel ist für die beiden, zeitlich voneinander getrennten Beladungsphasen A, B jeweils eine separate Kraftstoffeindüsung vorgesehen. Dementsprechend wird während der ersten Beladungsphase A die erste Einspritzmenge F₁ und während der zweiten Beladungsphase B die zweite Einspritzmenge F₂ eingedüst. Die Eindüsung des Kraftstoffs während der Zeit, innerhalb der auch Frischgas in den jeweiligen Brennraum 6 einströmt, verbessert die Gemischbildung im jeweiligen Brennraum 6. Besonders vorteilhaft ist eine Ausführungsform, bei welcher die zeitliche Lage der jeweiligen Einspritzzeitdauer so gewählt wird, dass während dieser Einspritzzeitdauer die Strömungsgeschwindigkeit des Frischgases ihr Maximum erreicht.

Der Abstand zwischen den beiden Beladungsphasen A, B hängt vom aktuellen Lastzustand der Brennkraftmaschine 1 ab. Im Leerlaufbetrieb, also bei minimaler Teillast ist besagter Abstand maximal. Mit zunehmender Last, insbesondere mit zunehmender Drehzahl, nimmt der Abstand ab. Dies wird dadurch erreicht, dass entweder der Schließzeitpunkt Tₛ der ersten Beladungsphase A nach spät verschoben wird oder dass der Öffnungszeitpunkt Tₒ der zweiten Beladungsphase B nach früh verschoben wird. Ebenso kann der Abstand zwischen den beiden Beladungsphasen A, B dadurch reduziert werden, dass sowohl der Schließzeitpunkt Tₛ der ersten Beladungsphase A in Richtung spät als auch der Öffnungszeitpunkt Tₒ der zweiten Beladungsphase B in Richtung früh verschoben werden. Die Einspritzzeitdauern für die jeweilige Einspritzdüse 9 werden dann entsprechend adaptiert bzw. hinsichtlich ihrer zeitlichen Lage entsprechend angepasst bzw. verschoben.

Bei bestimmten Betriebszuständen kann es erwünscht sein, zeitlich zwischen der ersten Beladungsphase A und der zweiten Beladungsphase B eine dritte Beladungsphase vorzusehen. Grundsätzlich ist es dann möglich, auch dieser dritten Beladungsphase einen Einspritzvorgang zuzuordnen.

Die Steuerung 14 bzw. darin abgespeicherte Programme, Algorithmen und Kennfelder sowie ggf. damit gekoppelte andere Steuerungen repräsentieren Einrichtungen, die es ermöglichen, das vorstehend beschriebene Betriebsverfahren für die Brennkraftmaschine 1 durchzuführen. Insbesondere stellen diese Einrichtungen die zeitliche Lage der Einspritzdauer des Kraftstoffes abhängig vom Zeitpunkt der Änderung der Schaltstellung des jeweiligen Taktventils 13 ein und steuern die Taktventile 13 für den jeweiligen Zylinder 5 zum Zumessen von Frischgas an.

## Patentansprüche

1. Verfahren zum Steuern einer entdrosselten Brennkraftmaschine (1) mit einer gemeinsamen Frischgasleitung (10), die mehreren Frischgasrohren (11) Frischgas zuführt, die ihrerseits je einem Zylinder (5) Frischgas zuführen, mit wenigstens einem Einlassventil (7) je Zylinder (5), mit einem Taktventil (13) je Frischgasrohr (11) zum Öffnen und Sperren des jeweiligen Frischgasrohrs (11) und mit einer Einspritzdüse (9) je Zylinder (5) zum Zumessen von Kraftstoff,
- bei dem für den jeweiligen Zylinder (5) die zeitliche Lage der Einspritzdauer des Kraftstoffs abhängig von einem Zeitpunkt einer Änderung der Schaltstellung des jeweiligen Taktventils (13) eingestellt wird,
- bei dem die Taktventile (13) so angesteuert werden, dass damit für den jeweiligen Zylinder (5) das Zumessen von Frischgas erfolgt,
**dadurch gekennzeichnet,**
- **dass** die Taktventile (13) zumindest während eines Teillastbetriebs der Brennkraftmaschine (1) so angesteuert werden, dass beim jeweiligen Zylinder (5) während eines Ansaugtakts zumindest zwei zeitlich voneinander beabstandete Frischgasbeladungsphasen (A, B) durchgerührt werden,
- **dass** zumindest während zwei separaten Frischgasbeladungsphasen (A, B) je eine separate Kraftstoffeinspritzung durchgeführt wird.

2. Verfahren nach Anspruch 1,
**dadurch gekennzeichnet,**
**dass** eine erste Frischgasbeladungsphase (A) den Beginn des Ansaugtakts und/oder das öffnen des jeweiligen Einlassventils (7) umfasst.

3. Verfahren nach Anspruch 1 oder 2,
**dadurch gekennzeichnet,**
**dass** eine zweite Frischgasbeladungsphase (B) das Ende des Ansaugtakts und/oder das Schließen des Einlassventils (7) umfasst.

4. Verfahren nach einem der Ansprüche 1 bis 3,
**dadurch gekennzeichnet,**
**dass** eine dritte Frischgasbeladungsphase zwischen erster und zweiter Frischgasbeladungsphase (A, B) angeordnet ist.

5. Verfahren nach einem der Ansprüche 1 bis 4,
**dadurch gekennzeichnet,**
**dass** die zeitliche Lage der Einspritzzeitdauer des Kraftstoffs so gewählt wird, dass während der Einspritzzeitdauer die Strömungsgeschwindigkeit des Frischgases ihr Maximum erreicht.

6. Vorrichtung zum Steuern einer entdrosselten Brennkraftmaschine (1) mit einer gemeinsamen Frischgasleitung (10), die mehreren Frischgasrohren (11) Frischgas zuführt, die ihrerseits je einem Zylinder (5) Frischgas zuführen, mit wenigstens einem Einlassventil (7) je Zylinder (5), mit einem Taktventil (13) je Frischgasrohr (11) zum Öffnen und Sperren des jeweiligen Frischgasrohrs (11) und mit einer Einspritzdüse (9) je Zylinder (5) zum Zumessen von Kraftstoff, wobei Einrichtungen (14) vorgesehen sind, welche die zeitliche Lage der Einspritzzeitdauer des Kraftstoffs abhängig von einem Zeitpunkt der Änderung der Schaltstellung des jeweiligen Taktventils (13) einstellen und welche die Taktventile (13) für den jeweiligen Zylinder (5) zum Zumessen von Frischgas ansteuern, derart
- dass die Taktventile (13) zumindest während eines Teillastbetriebs der Brennkraftmaschine (1) so angesteuert werden, dass beim jeweiligen Zylinder (5) während eines Ansaugtakts zumindest zwei zeitlich voneinander beabstandete Frischgasbeladungsphasen (A, B) durchgeführt werden,
- dass zumindest während zwei separaten Frischgasbeladungsphasen (A, B) je eine separate Kraftstoffeinspritzung durchgeführt wird.

7. Entdrosselte Brennkraftmaschine (1), insbesondere in einem Kraftfahrzeug, mit einer gemeinsamen Frischgasleitung (10), die mehreren Frischgasrohren (11) Frischgas zuführt, die ihrerseits je einem Zylinder (5) Frischgas zuführen, mit wenigstens einem Einlassventil (7) je Zylinder (5), mit einem Taktventile (13) je Frischgasrohr (11) zum Öffnen und Sperren des jeweiligen Frischgasrohrs (11), mit einer Einspritzdüse (9) je Zylinder (5) zum Zumessen von Kraftstoff und mit einer Vorrichtung nach Anspruch 6.

## Claims

1. A method for controlling a dethrottled internal combustion engine (1) having a shared fresh gas line (10) supplying fresh gas to a plurality of fresh gas pipes (11), each of which carries fresh gas to one cylinder (5), with at least one intake valve (7) per cylinder (5), with a clocked valve (13) for each fresh gas pipe (11) for opening and closing the respective fresh gas pipe (11), and having a fuel injector (9) per cylinder (5) for metered addition of fuel,
- in which the chronological position of the injection time of the fuel in time is adjusted for the respective cylinder (5) as a function of a point in time of a change in the switch position of the respective clocked valve (13),
- in which the clocked valves (13) are controlled in such a way that the metered addition of fresh gas is thus performed for the respective cylinder (5),
**characterized in**
- **that** the clocked valves (13) are controlled at least during partial-load operation of the internal combustion engine (1) so that at least two fresh gas charging phases (A, B) spaced a distance apart from one another in time are performed during one intake stroke with each cylinder (5),
- **that** a separate fuel injection is performed at least during two separate fresh gas charging phases (A, B).

2. The method according to Claim 1,
**characterized in that**
a first fresh gas charging phase (A) comprises the start of the intake stroke and/or the opening of the respective intake valve (7).

3. The method according to Claim 1 or 2,
**characterized in that**
a second fresh gas charging phase (B) comprises the end of the intake stroke and/or the closing of the intake valve (7).

4. The method according to any one of Claims 1 through 3,
**characterized in that**
a third fresh gas charging phase occurs between the first and second fresh gas charging phases (A, B).

5. The method according to any one of Claims 1 through 4,
**characterized in that**
the chronological position of the injection time of the fuel is selected so that during the injection time the flow rate of fresh gas reaches its maximum.

6. A device for controlling a dethrottled internal combustion engine (1) having a shared fresh gas line (10) that supplies fresh gas to a plurality of fresh gas pipes (11) which in turn carry fresh gas to each cylinder (5), having at least one intake valve (7) per cylinder (5), having a clocked valve (13) for fresh gas pipes (11) for opening and closing the respective fresh gas pipe (11) and having a fuel injector (9) for each cylinder (5) for metered addition of fuel, whereby devices (14) are provided which adjust the chronological location of the injection time of the fuel as a function of a point in time of the change in switch position of the respective clocked valve (13) and which control the clocked valves (13) for the respective cylinder (5) for metered addition of fresh gas such
- that the clocked valves (13) are controlled at least during partial-load operation of the internal combustion engine (1) so that at least two fresh gas charging phases (A, B) spaced a distance apart from one another in time are performed during one intake stroke with each cylinder (5),
- that a separate fuel injection is performed at least during two separate fresh gas charging phases (A, B).

7. The dethrottled internal combustion engine (1), in particular in a motor vehicle, having a shared fresh gas line (10) which supplies fresh gas to a plurality of fresh gas pipes (11), each of which in turn carries fresh gas to a cylinder (5), having at least one intake valve (7) per cylinder (5), having a clocked valve (13) for each fresh gas pipe (11) for opening and closing the respective fresh gas pipe (11), having a fuel injector (9) for each cylinder (5) for metered addition of fuel and having a device according to Claim 6.

## Revendications

1. Procédé de commande d'un moteur à combustion interne (1) débridé comportant une conduite de gaz frais (10) commune, qui alimente en gaz frais plusieurs tubes de gaz frais (11), qui alimentent de leur côté respectivement un cylindre (5) en gaz frais, comportant au moins une soupape d'admission (7) par cylindre (5), avec une soupape de cadencement (13) par tuyau de gaz frais (11) pour ouvrir et fermer le tuyau de gaz frais (11) respectif et comportant une buse d'injection (9) par cylindre (5) afin de doser du carburant,
- dans lequel pour le cylindre (5) respectif la position temporelle de la durée d'injection du carburant est réglée en fonction d'un point temporel d'une modification de la position de commutation de la soupape de cadencement (13) respective,
- dans lequel les soupapes de cadencement (13) sont pilotées de telle sorte que le dosage de gaz frais ait ainsi lieu pour le cylindre (5) respectif,
**caractérisé en ce que**
- les soupapes de cadencement (13) sont pilotées au moins pendant un fonctionnement en charge partielle du moteur à combustion interne (1) de telle sorte que sur le cylindre (5) respectif pendant un cycle d'aspiration au moins deux phases de charge de gaz frais (A,B) espacées temporellement l'une de l'autre soient effectuées,
- au moins pendant deux phases de charge de gaz frais (A,B) séparées respectivement une injection de carburant séparée est effectuée.

2. Procédé selon la revendication 1, **caractérisé en ce que** une première phase de charge de gaz frais (A) comprend le début du cycle d'aspiration et/ou l'ouverture de la soupape d'admission respective (7).

3. Procédé selon les revendications 1 ou 2, **caractérisé en ce que** une deuxième phase de charge de gaz frais (B) comprend la fin du cycle d'aspiration et/ou la fermeture de la soupape d'admission (7).

4. Procédé selon une des revendications 1 à 3, **caractérisé en ce que** une troisième phase de charge de gaz frais est disposée entre la première et la deuxième phase de charge de gaz frais (A,B).

5. Procédé selon une des revendications 1 à 4, **caractérisé en ce que** la position temporelle de la durée d'injection du carburant est sélectionnée de telle sorte que pendant la durée d'injection la vitesse d'écoulement du gaz frais atteigne son maximum.

6. Dispositif de commande d'un moteur à combustion interne (1) débridé comportant une conduite de gaz frais (10) commune, qui alimente en gaz frais plusieurs tuyaux de gaz frais (11), qui alimentent de leur côté en gaz frais respectivement un cylindre (5), comportant au moins une soupape d'admission (7) par cylindre (5), comportant une soupape de cadencement (13) par tuyau de gaz frais (11) pour ouvrir et fermer le tuyau de gaz frais (11) respectif et comportant une buse d'injection (9) par cylindre (5) pour doser le carburant, dans lequel des dispositifs sont prévus, qui règlent la position temporelle de la durée d'injection du carburant en fonction d'un point temporel de la modification de la position de commutation de la soupape de cadencement (13) respective et qui pilotent les soupapes de cadencement (13) pour le cylindre (5) respectif pour doser le gaz frais, de telle sorte que
- les soupapes de cadencement (13) sont pilotées au moins pendant un fonctionnement en charge partielle du moteur à combustion interne (1) de telle sorte que sur le cylindre respectif (5) pendant un cycle d'aspiration au moins deux phases de charge de gaz frais (A,B) espacées temporellement l'une de l'autre sont effectuées,
- au moins pendant deux phases de charge de gaz frais (A,B) séparées, une injection de carburant séparée est respectivement effectuée.

7. Moteur à combustion interne (1) débridé, notamment dans un véhicule automobile, comportant une conduite de gaz frais (10) commune, qui alimente en gaz frais plusieurs tuyaux de gaz frais (11), qui alimentent de leur côté respectivement un cylindre (5) en gaz frais, comportant au moins une soupape d'admission (7) par cylindre (5), comportant une soupape de cadencement (13) par tuyau de gaz frais (11) pour ouvrir et fermer le tuyau de gaz frais (11) respectif, comportant une buse d'injection (9) par cylindre (5) pour doser le carburant et comportant un dispositif selon la revendication 6.
